(19) **Europäisches Patentamt / European Patent Office / Office européen des brevets**

(11) **EP 3 827 221 B1**

(12) **FASCICULE DE BREVET EUROPEEN**

(45) Date de publication et mention de la délivrance du brevet:
**08.03.2023 Bulletin 2023/10**

(21) Numéro de dépôt: **19761915.8**

(22) Date de dépôt: **23.07.2019**

(51) Classification Internationale des Brevets (IPC):
***G01C 21/00*** *(2006.01)*

(52) Classification Coopérative des Brevets (CPC):
**G01C 21/00**

(86) Numéro de dépôt international:
**PCT/FR2019/051826**

(87) Numéro de publication internationale:
**WO 2020/021194 (30.01.2020 Gazette 2020/05)**

(54) **PROCÉDÉ ET DISPOSITIF D'AIDE À LA NAVIGATION D'UN PORTEUR À L'AIDE D'UN FILTRE DE KALMAN INVARIANT ET D'UN ÉTAT DE NAVIGATION D'UN DEUXIÈME PORTEUR**

FAHRZEUGNAVIGATIONSASSISTENZVERFAHREN UND -VORRICHTUNG UNTER VERWENDUNG EINES INVARIANTEN KALMAN-FILTERS UND EINES NAVIGATIONSSTATUS EINES ZWEITEN FAHRZEUGS

VEHICLE NAVIGATION ASSISTANCE METHOD AND DEVICE USING AN INVARIANT KALMAN FILTER AND A NAVIGATION STATUS OF A SECOND VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2018 FR 1856802**

(43) Date de publication de la demande:
**02.06.2021 Bulletin 2021/22**

(73) Titulaire: **SAFRAN ELECTRONICS & DEFENSE 92100 Boulogne Billancourt (FR)**

(72) Inventeurs:
• **ROBERT, Emmanuel**
**92100 Boulogne Billancourt (FR)**
• **BARRAU, Axel**
**92100 Boulogne-Billancourt (FR)**
• **BERNAL, Thomas**
**92100 Boulogne-Billancourt (FR)**

(74) Mandataire: **Regimbeau**
**20, rue de Chazelles**
**75847 Paris Cedex 17 (FR)**

(56) Documents cités:
• Scott M. Bezick ET AL: "Inertial Navigation for Guided Missile Systems" In: "JOHNS HOPKINS APL TECHNICAL DIGEST, VOLUME 28, NUMBER 4 (2010)", 1 janvier 2010 (2010-01-01), IEEE, XP055594754, pages 331-342, section: transfer alignment; page 336
• AXEL BARRAU ET AL: "The Invariant Extended Kalman Filter as a Stable Observer", IEEE TRANSACTIONS ON AUTOMATIC CONTROL., vol. 62, no. 4, 1 avril 2017 (2017-04-01), pages 1797-1812, XP055595129, US ISSN: 0018-9286, DOI: 10.1109/TAC.2016.2594085 cité dans la demande
• Axel Barrau: "Non-linear state error based extended Kalman filters with applications to navigation", PhD thesis, 15 septembre 2015 (2015-09-15), XP055595138, Extrait de l'Internet: URL:https://www.theses.fr/2015ENMP0080.pdf [extrait le 2019-06-07]

EP 3 827 221 B1

**Description**

**DOMAINE DE L'INVENTION**

La présente invention concerne un procédé d'aide à la navigation d'un porteur utilisant un filtre de Kalman invariant.

**ETAT DE LA TECHNIQUE**

Le problème de l'estimation de l'état d'un système physique se pose en général de la façon suivante. L'état du système à un instant n est représenté par un vecteur $X_n$, et une observation disponible à l'instant n est représentée par un autre vecteur $Y_n$. L'évolution du système s'écrit :

$$X_{n+1} = f(X_n)$$

où f est une fonction connue (généralement appelée fonction de propagation), pouvant dépendre de mesures de capteurs. Les observations $Y_n$ sont reliées à l'état du système par une fonction d'observation h connue:

$$Y_n = h(X_n)$$

Construire une bonne estimation $\hat{X}_n$ de l'état $X_n$ à partir de la séquence $(Y_n)_{n \geq 0}$ est en général un problème difficile, pouvant néanmoins être simplifié dans certains cas.

On appelle « systèmes linéaires » le cas particulier des systèmes de la forme :

$$X_{n+1} = FX_n + w_n$$

$$Y_n = HX_n + V_n$$

où F est une matrice de propagation, H est une matrice d'observation, $w_n$ et $V_n$ sont des bruits venant perturber les prédictions et les mesures.

Dans ce cas linéaire, une méthode connue consiste à construire un estimateur désigné sous le nom de filtre de Kalman. Ce filtre de Kalman met en oeuvre les calculs suivants :

$$\hat{X}_{n+1|n} = F\hat{X}_{n|n}$$

$$\hat{X}_{n+1|n+1} = \hat{X}_{n+1|n} + K_{n+1}\left(Y_{n+1} - H\hat{X}_{n+1|n}\right)$$

où les indices $n + 1|n$ et $n + 1|n + 1$ désignent respectivement l'estimation calculée à l'instant $n + 1$ sans tenir compte de l'observation $Y_{n+1}$ et à l'instant $n + 1$ en tenant compte de l'observation $Y_{n+1}$. La matrice $K_n$ est appelée « matrice de gains », elle peut être calculée à l'aide d'une équation de Riccati. L'erreur d'estimation est alors définie comme :

$$e_{n|n} = X_n - \hat{X}_{n|n}$$

(après la prise en compte de l'observation $Y_n$)

$$e_{n+1|n} = X_{n+1} - \hat{X}_{n+1|n}$$

(avant la prise en compte de l'observation $Y_{n+1}$) On peut facilement vérifier que cette erreur suit l'évolution suivante :

$$e_{n+1|n} = F e_{n|n}$$

(avant la prise en compte de l'observation $Y_{n+1}$)

$$e_{n+1|n+1} = (I - K_{n+1} H) e_{n+1|n}$$

(après la prise en compte de l'observation $Y_{n+1}$) où $I$ désigne la matrice identité.

Les équations ci-dessus ne dépendent pas de $X_n$, on peut donc construire un estimateur fonctionnant pour toute trajectoire réelle du système, ce qui n'est pas le cas pour un système non-linéaire quelconque.

Dans le cas d'un système non linéaire, un filtre de Kalman ordinaire ne peut être mis en oeuvre. Il a ainsi été proposé une variante du filtre de Kalman appelée filtre de Kalman « étendu », lequel est adapté à un système non linéaire. Toutefois, lorsqu'un filtre de Kalman étendu est utilisé, les simplifications constatées dans le cas linéaire ne se produisent plus, si bien qu'on obtient une équation d'erreur faisant intervenir $X_n$ et $\hat{X}_n$. Ce problème est à l'origine de la plupart des cas de divergence que l'on rencontre lorsque l'on utilise un filtre de Kalman étendu.

Néanmoins, un deuxième cas particulier rendant le problème d'estimation plus facile est celui des systèmes d'observation « groupe-affines », c'est-à-dire les systèmes pour lesquels on dispose d'une loi de composition interne (c'est-à-dire une opération que l'on notera dans la suite par une étoile *) définie sur l'espace de l'état considéré et telle que les deux propriétés suivantes soient vérifiées :

a. La fonction de propagation $f$ vérifie pour tout couple $a, b$ d'éléments de l'espace d'état la relation :

$$f(a * b) = f(a) * f(Id)^{-1} * f(b)$$

Où $Id$ est l'élément identité du groupe induit par la loi *.

b. La fonction d'observation $h$ est de la forme $h(X) = l(x, y_0)$, avec $y_0$ un élément de l'espace des observations (auquel appartiennent les $Y_n$) et $l(.,.)$ une action de groupe, c'est-à-dire une fonction vérifiant

$$l(a * b, y) = l\big(a, l(b, y)\big)$$

Sous ces deux conditions, on peut définir un filtre de Kalman étendu dit « invariant » (généralement appelé plus simplement « filtre de Kalman invariant ») qui est régi par les équations suivantes :

$$\hat{X}_{n+1|n} = f\big(\hat{X}_{n|n}\big)$$

$$\hat{X}_{n+1|n+1} = \hat{X}_{n+1|n} * \exp\big(K_n\big[l\big(\hat{X}_{n+1|n}^{-1}, Y_{n+1}\big) - l(Id, y_0)\big]\big)$$

où $\exp(\cdot)$ est l'application exponentielle (cette fonction est connue dès que la loi de composition interne est connue, si elle définit un groupe de Lie) et $K_n$ est une « matrice de gain » comme dans le cas linéaire. On peut alors montrer que l'erreur d'estimation aura là aussi une évolution autonome, comme dans le cas linéaire. Le problème d'estimation de l'état est donc simplifié, et ce même si le système considéré n'est pas linéaire.

Lorsque la condition b. n'est pas vérifiée on peut utiliser un filtre de la forme

$$\hat{X}_{n+1|n} = f\big(\hat{X}_{n|n}\big)$$

$$\hat{X}_{n+1|n+1} = \hat{X}_{n+1|n} * \exp\big(K_{n+1}\big[Y_{n+1} - h\big(\hat{X}_{n+1|n}\big)\big]\big)$$

En pratique, un filtre de Kalman est en général implémenté sur un système qui ne vérifie pas la condition a., mais qui s'approche d'un système qui lui vérifie bien cette condition a.

Des filtres de Kalman invariants ont ainsi été utilisés pour aider à la navigation d'un porteur. Un filtre de Kalman invariant utilisé dans un tel contexte d'aide à la navigation estime un état de navigation représentatif d'un mouvement du porteur considéré.

L'utilisation d'un filtre de Kalman invariant réclame de trouver une loi de composition interne * pour laquelle les conditions a. et b. sont vérifiées ou quasiment vérifiées afin de rendre le problème de l'estimation plus facile. Il n'existe pas de méthode générique permettant de trouver une telle opération, et des publications diverses ont eu pour objet de fournir la bonne opération pour des systèmes particuliers. A titre d'exemples :

a) L'opération à utiliser pour un problème d'estimation d'orientation et de vitesse est décrit dans le document suivant : Bonnable, S., Martin, P., & Salaün, E. (2009). Invariant Extended Kalman Filter: theory and application to a velocity-aided attitude estimation problem. In Decision and Control, 2009 held jointly with the 2009 28th Chinese Control Conférence. CDC/CCC 2009. Proceedings of the 48th IEEE Conférence on (pp. 1297-1304). IEEE.

b) L'opération à utiliser pour une navigation inertielle avec estimation de l'orientation, la vitesse et la position est décrite dans le document suivant : Barrau, A., & Bonnabel, S. (2017). The invariant extended Kalman filter as a stable observer. IEEE Transactions on Automatic Control, 62(4), 1797-1812.

c) L'opération à utiliser pour le SLAM (acronyme anglais de Simultaneous Localization And Mapping), c'est-à-dire une navigation utilisant des points de repère fixes de l'environnement du porteur, est décrite dans le document Barrau, A., & Bonnabel, S. (2015). An EKF-SLAM algorithm with consistency properties. arXiv preprint arXiv:1510.06263.

d) Une liste de systèmes pratiques pour lesquels une opération est connue est en outre décrite dans le document Barrau, A., & Bonnabel, S. (2017). Linear observation systems on groups (I).

e) L'utilisation de la connaissance a priori de l'orientation mécanique relative entre un missile (correspondant au premier porteur de la présente demande) et d'une plate-forme de lancement (correspondant au deuxième porteur de la présente demande) comme données initiales du filtre de Kalman pour sa navigation est présentée dans le document suivant: Scott M. Bezick ET AL: "Inertial Navigation for Guided Missile Systems"In: "JOHNS HOPKINS APL TECHNICAL DIGEST, VOLUME 28, NUMBER 4 (2010)", 1 janvier 2010 (2010-01-01), IEEE.

Dans chacune de ces applications, sont utilisés des capteurs proprioceptifs d'un porteur et un filtre de Kalman invariant pour estimer l'état de navigation de ce porteur.

Ces applications sont de deux types. Certaines d'entre elles utilisent des données cinématiques exprimées dans un repère de référence dans lequel le porteur est mobile. Toutefois, ces données cinématiques ne sont pas toujours disponibles. Les autres applications n'utilisent pas de telles données cinématiques, mais, en contrepartie, ne permettent pas d'estimer un état de navigation du porteur dans le repère de référence ; ces applications ne peuvent produire que des états de navigation relatifs à une situation initiale.

## EXPOSE DE L'INVENTION

Un but de l'invention est de surmonter les inconvénients ci-dessus mentionnés.

Il est dès lors proposé, selon un premier aspect de l'invention, un procédé d'aide à la navigation d'un premier porteur immobile par rapport à un deuxième porteur lui-même mobile dans un repère de référence, le procédé comprenant les étapes suivantes mises en oeuvre par le premier porteur :

- réception d'un état de navigation dans le repère de référence du deuxième porteur fourni par le deuxième porteur,
- acquisition de données de mouvement du premier porteur par au moins un capteur proprioceptif du premier porteur,
- estimation d'un état de navigation du premier porteur par un filtre de Kalman invariant utilisant l'état de navigation du deuxième porteur comme données d'observation, dans lequel l'état de navigation du premier porteur comprend :

  o des premières variables représentatives d'une première transformation rigide liant un repère attaché au premier porteur au repère de référence, et
  o des deuxièmes variables représentatives d'une deuxième transformation rigide liant un repère attaché au deuxième porteur au repère attaché au premier porteur, et

dans lequel le filtre de Kalman invariant utilise comme loi de composition interne une loi comprenant une composition terme à terme de la première transformation rigide et de la deuxième transformation rigide.

Le procédé proposé exploite avantageusement le fait que le premier porteur soit immobile par rapport à un deuxième porteur dont on connaît déjà un état de navigation estimé, constituant une information de nature absolue c'est-à-dire par rapport au repère de référence dans lequel le deuxième porteur est mobile.

Ce procédé a pour avantage de fonctionner même si le premier porteur ne connaît pas sa position relativement au deuxième porteur (autrement dit lorsque le premier porteur et le deuxième porteur ne sont pas harmonisés).

Il se trouve par ailleurs que la loi de composition interne utilisée dans ce procédé permet s'approcher des conditions a. et b. énoncées en introduction. Les calculs mis en oeuvre par le filtre de Kalman invariant sont donc particulièrement simples à mettre en oeuvre.

Le procédé selon le premier aspect de l'invention peut en outre comprendre les caractéristiques facultatives suivantes, prises seules ou en combinaison lorsque cela est techniquement possible.

De préférence, les premières variables comprennent une matrice de rotation représentant une orientation du premier porteur, et les deuxièmes variables comprennent une matrice de rotation représentant l'orientation du deuxième porteur par rapport au premier porteur.

De préférence, les premières variables comprennent un vecteur de position du premier porteur, et les deuxièmes variables comprennent un vecteur de position du deuxième porteur par rapport au premier porteur.

De préférence, l'état de navigation du premier porteur estimé comprend en outre un vecteur vitesse du premier porteur dans le repère de référence.

De préférence, la loi de composition interne applique des transformations identiques à l'un des vecteurs de position et au vecteur vitesse.

De préférence, l'état de navigation du deuxième porteur reçu comprend un vecteur de position du deuxième porteur dans le repère de référence et une matrice de rotation représentant une orientation du deuxième porteur dans le repère de référence.

De préférence, le filtre de Kalman invariant utilise une innovation comprenant un vecteur $Z^x$ de la forme :

$$Z^x = \log\left(\hat{T}_1^{-1} \circ Y \circ \hat{T}_{21}\right)$$

où :

- $\hat{T}_1$ est une estimée des premières variables,
- $\hat{T}_{21}$ est une estimée des deuxièmes variable, dans lequel la deuxième transformation rigide permet de passer du premier repère au deuxième repère,
- $Y$ désigne les données d'observations utilisées par le filtre de Kalman invariant,
- $\circ$ désigne une composition,
- $\log(\cdot)$ désigne une application logarithme d'un groupe de Lie.

De préférence, l'état de navigation du deuxième porteur reçu comprend un vecteur vitesse du deuxième porteur dans le repère de référence et une matrice de rotation représentant une orientation du deuxième porteur dans le repère de référence, les données de mouvement du premier porteur, acquises le capteur proprioceptif, comprennent une vitesse angulaire du premier porteur.

De préférence, les premières variables comprennent une matrice de rotation représentant une orientation du premier porteur, et les deuxièmes variables comprennent une matrice de rotation représentant l'orientation du deuxième porteur par rapport au premier porteur, et le filtre de Kalman invariant utilise une innovation comprenant un vecteur $Z^v$ de la forme :

$$Z^v = \log\left(\left(\hat{R}_1^T R_2 \hat{R}_{21}, \hat{R}_1^T (v_2 - \hat{v}_1) + \hat{R}_1^T R_2 (\omega \times \hat{x}_{21})\right)\right)$$

où :

- $\hat{R}_1$ est une estimée de la matrice de rotation représentant une orientation du premier porteur.
- $\hat{R}_{21}$ est une estimée de la matrice de rotation représentant l'orientation du deuxième porteur par rapport au premier porteur,
- $\hat{x}_{21}$ est une estimée d'un vecteur de translation définissant la deuxième transformation rigide,
- $R_2$ est la matrice de rotation représentant une orientation du deuxième porteur dans le repère de référence,
- $v_2$ est le vecteur vitesse du deuxième porteur dans le repère de référence,
- $\omega$ est la vitesse angulaire du premier porteur,
- $\times$ désigne un produit vectoriel,
- $\log(\cdot)$ désigne une application logarithme du groupe de Lie *SE(3)*.

De préférence, le vecteur $Z^v$ est constitué d'un premier vecteur $Z_R^v$ de taille 3 représentatif d'une rotation, et d'un deuxième vecteur $Z_v^v$ de taille 3 également, et dans lequel le filtre de Kalman invariant utilise une innovation Z de la forme :

$$Z = \begin{pmatrix} Z^x \\ Z_v^v \end{pmatrix}$$

De préférence, l'état de navigation du premier porteur estimé comprend en outre au moins un état d'erreur propre au capteur proprioceptif, et la loi de composition interne est additive pour cette variable d'erreur propre au capteur proprioceptif.

De préférence, le premier porteur est un aéronef et le deuxième porteur est un porte-aéronefs, ou le premier porteur est un projectile et le deuxième porteur est un aéronef qui porte le projectile, ou le premier porteur est une centrale inertielle d'un véhicule et le deuxième porteur est un capteur extéroceptif du véhicule.

De préférence, l'étape d'estimation est mise en oeuvre en parallèle par plusieurs filtres de Kalman invariants, de sorte à obtenir plusieurs estimées de l'état de navigation du premier porteur, et comprend par ailleurs des étapes de :

- pour chaque estimée, détermination d'une métrique de vraisemblance de l'estimée,
- production d'une estimée consolidée de l'état de navigation du premier porteur en fonction des estimées et de leurs métriques de vraisemblance associées.

Il est également proposé, selon un deuxième aspect de l'invention, un dispositif d'aide à la navigation d'un premier porteur immobile par rapport à un deuxième porteur lui-même mobile dans un repère de référence, le dispositif comprenant :

- au moins un capteur proprioceptif configuré pour acquérir des données de mouvement du premier porteur,
- une interface de communication pour recevoir un état de navigation du deuxième porteur fourni par le deuxième porteur,
- un filtre de Kalman invariant configuré pour estimer un état de navigation du premier porteur en utilisant l'état de navigation du deuxième porteur comme données d'observation, dans lequel l'état de navigation comprend :

  o des premières variables représentatives d'une première transformation rigide liant un repère attaché au premier porteur au repère de référence, et
  o des deuxièmes variables représentatives d'une deuxième transformation rigide liant un repère attaché au deuxième porteur au repère attaché au premier porteur, et

et dans lequel le filtre de Kalman invariant utilise comme loi de composition interne une loi comprenant une composition terme à terme de la première transformation rigide et de la deuxième transformation rigide.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 illustre schématiquement deux porteurs et des repères.
- La figure 2 illustre de façon schématique des composants internes des porteurs de la figure 1, selon un mode de réalisation de l'invention.
- La figure 3 est un organigramme d'étapes d'un procédé d'aide à la navigation, selon un mode de réalisation de l'invention.

Sur l'ensemble des figures, les éléments similaires portent des références identiques.

## DESCRIPTION DETAILLEE DE L'INVENTION

### 1/ Description du système

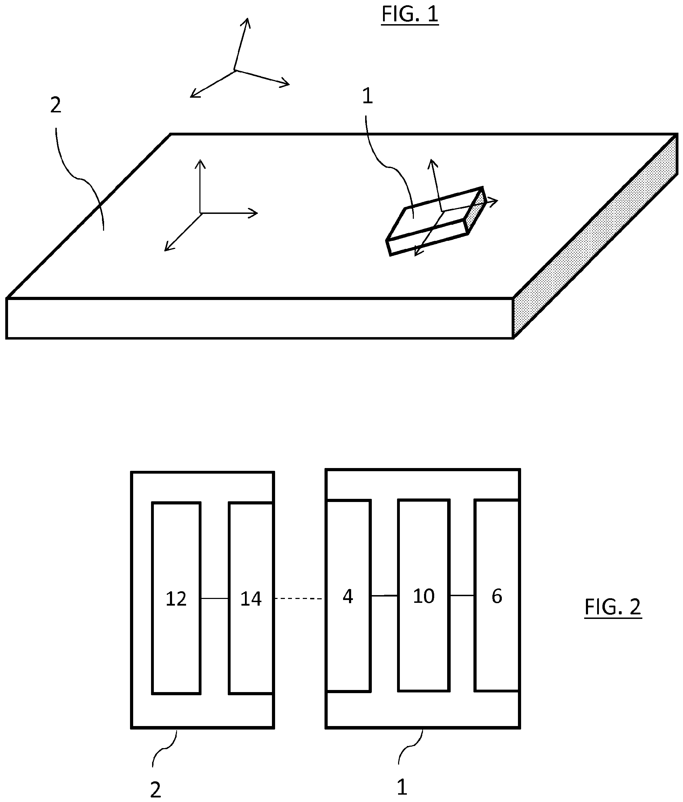

En référence à la **figure 1,** un système comprend un premier porteur 1 et au moins un deuxième porteur 2 immobile par rapport au premier porteur 1.

Dans ce qui suit, on considère différents repères : un premier repère attaché au premier porteur 1, un deuxième repère attaché au deuxième porteur 2, et un repère de référence dans lequel les deux porteurs 1, 2 sont mobiles. Le repère de référence est par exemple un repère céleste attaché à des étoiles ou à la terre.

Sur la figure 1, le deuxième porteur est très schématiquement représenté par un parallélépipède, et le premier porteur par un objet de plus petites dimensions posé sur le premier porteur. Cette représentation n'est toutefois que schématique, et les deux porteurs peuvent être de types variés.

Dans un mode de réalisation, le premier porteur est un aéronef, par exemple un avion ou un hélicoptère, et le deuxième porteur est un porte-aéronefs, par exemple un navire de type porte-avions sur lequel l'avion est posé.

Dans un autre mode de réalisation, le premier porteur est un projectile, par exemple un missile, et le deuxième porteur est un aéronef qui porte le projectile, par exemple un avion ou un hélicoptère.

Dans un autre mode de réalisation, le premier porteur est une centrale inertielle d'un véhicule, par exemple terrestre, et le deuxième porteur est un capteur extéroceptif du même véhicule.

En référence à la **figure 2,** le premier porteur 1 comprend une interface de communication de données avec le deuxième porteur 2. L'interface de communication 4 est de type radio sans fil (Wi-Fi, bluetooth) et comprend par exemple une antenne. En variante cette interface est filaire.

Le premier porteur 1 comprend au moins un capteur proprioceptif 6. Chaque capteur proprioceptif utilisé est configuré pour acquérir des données de mouvement du premier porteur dans le premier repère. Ces données comprennent typiquement des vitesses angulaires, et des accélérations.

Le capteur proprioceptif comprend par exemple une centrale inertielle laquelle comprend une pluralité de capteurs inertiels tels que des gyromètres et des accéléromètres.

En variante ou complément, le capteur proprioceptif comprend au moins un odomètre.

Le premier porteur 1 comprend par ailleurs une unité de traitement de données 10. L'unité de traitement 10 est agencée pour traiter des données reçues par l'interface de communication 4.

L'unité de traitement de données 10 comprend typiquement au moins un processeur configuré pour mettre en oeuvre un procédé d'aide à la navigation qui sera décrit ci-après, au moyen d'un filtre de Kalman de type invariant. Le filtre de Kalman invariant se présente typiquement sous la forme d'un programme informatique exécutable par le processeur de l'unité de traitement de données. Le fonctionnement général d'un filtre de Kalman invariant est connu en lui-même. Toutefois, on verra dans la suite que la loi de composition interne utilisée pour configurer le filtre de Kalman invariant mis en oeuvre par l'unité de traitement 10 est choisie de manière particulière.

De préférence, l'unité de traitement 10 est adaptée pour mettre en oeuvre plusieurs filtres de Kalman en parallèle.

Par ailleurs, le deuxième porteur 2 comprend des moyens pour estimer un état de navigation de ce deuxième porteur dans le repère de référence. Ces moyens sont connus en même. On pourra par exemple utiliser les moyens décrits dans le document intitulé « Aided navigation: GPS with high rate sensors »par Jay Farell, publié en 2008.

Le deuxième porteur 2 comprend en outre une interface de communication avec le premier porteur 1, du même type que l'interface de communication X.

## 2/ Configuration du filtre de Kalman invariant

Le filtre de Kalman invariant mis en oeuvre par l'unité de traitement 10 est configuré pour estimer un état de navigation du premier porteur 1 dans le repère de référence.

L'état de navigation du premier porteur comprend des premières variables représentatives d'une première transformation rigide liant le premier repère (attaché au premier porteur 1) au repère de référence, et des deuxièmes variables représentatives d'une deuxième transformation rigide liant le deuxième repère (attaché au deuxième porteur 2) au premier repère.

De façon bien connue, une transformation rigide (également connue sous le nom d'isométrie affine), est une transformation qui conserve les distances entre chaque paire de point d'un solide. Ainsi, chacune des première et deuxième transformations rigides peut être caractérisée par la composition d'une rotation et d'une translation.

Dans la suite, on détaillera un mode de réalisation dans lequel l'état de navigation du premier porteur, noté $X_1$, comprend les éléments suivants :

$$X_1 = (R_1, v_1, x_1, R_{21}, x_{21})$$

où:

- $R_1$ est une matrice de rotation représentant l'orientation du premier porteur dans le repère de référence (composante de rotation de la transformation qui permet de passer de coordonnées d'un point dans le premier repère à des coordonnées du même point porteur dans le repère de référence),

- $v_1$ est un vecteur vitesse représentant la vitesse du premier porteur dans le repère de référence,
- $x_1$ est un vecteur position représentant la position du premier porteur dans le repère de référence (il s'agit de la composante de translation de la transformation qui permet de passer de coordonnées d'un point dans le premier repère à des coordonnées du même point dans le repère de référence),
- $R_{21}$ est une matrice de rotation représentant une orientation relative entre le premier repère et le deuxième repère. On prendra comme exemple ici une matrice permettant de passer du premier repère (attaché au premier porteur 1) au deuxième repère (attaché au deuxième porteur 2), l'inverse étant parfaitement envisageable.
- $x_{21}$ est un bras de levier entre le premier porteur 1 et le deuxième porteur 2. Il s'agit d'un vecteur de translation permettant de passer des coordonnées d'un point dans le premier repère aux coordonnées du même point dans le deuxième repère.

Dans ce mode de réalisation particulier, les premières variables sont $R_1$, $x_1$ et $v_1$ ; et les deuxièmes variables sont $R_{21}$, $x_{21}$.

Dans la suite on considère que la première transformation rigide est $\hat{T}_1 = (R_1, x_1)$ et que la deuxième transformation rigide est $T_{21} = (R_{21}, x_{21})$.

Le filtre de Kalman invariant est en outre configuré pour utiliser comme données d'observation un état de navigation $X_2$ du deuxième porteur 2, exprimé dans le repère de référence.

L'état de navigation du deuxième porteur 2 comprend typiquement

- une matrice de rotation $R_2$ représentant l'orientation du deuxième porteur dans le repère de référence (composante de rotation de la transformation rigide qui permet de passer de coordonnées d'un point dans le deuxième repère à des coordonnées du même point porteur dans le repère de référence),
- $x_2$ un vecteur position représentant la position du deuxième porteur dans le repère de référence (il s'agit de la composante de translation de la transformation rigide qui permet de passer de coordonnées d'un point dans le deuxième repère à des coordonnées du même point porteur dans le repère de référence).

Il est envisageable d'inclure un vecteur vitesse $v_2$ représentant la vitesse du deuxième porteur dans le repère de référence, dans cet état. On considérera néanmoins dans la suite que cet état ne comprend pas une telle vitesse.

L'observation du filtre de Kalman invariant s'écrit alors

$$Y = T_2 = (R_2, x_2)$$

Le filtre de Kalman invariant est configuré pour utiliser comme loi de composition interne, notée *, une composition terme à terme de la première transformation rigide et de la deuxième transformation rigide.

Cette loi de composition peut être étendue au vecteur vitesse du premier porteur, lorsque celui-ci est compris également dans l'état de navigation du premier porteur. Dans ce cas, la loi de composition interne * applique des transformations identiques à l'un des vecteurs de position et au vecteur vitesse.

La loi de composition interne est appliquée à des états $(R_1, v_1, x_1, R_{21}, x_{21})$ et ( $R_1'$, $v$, $x_1', R_{21}', x_{21}'$ ) de la manière suivante :

$$(R_1, v_1, x_1, R_{21}, x_{21}) * (R_1', v_1', x_1', R_{21}', x_{21}') = (R_1 R_1', v_1 + R_1 v_1', x_1 + R_1 x_1', R_{21} R_{21}', x_{21} + R_{21} x_{21}')$$

On constate ici que le deuxième terme et le troisième terme du produit de la loi de composition interne * sont de même forme en raison du fait que les positions et les vitesses sont traités par cette loi de la même manière.

### 3/ Procédé d'aide à la navigation du premier porteur

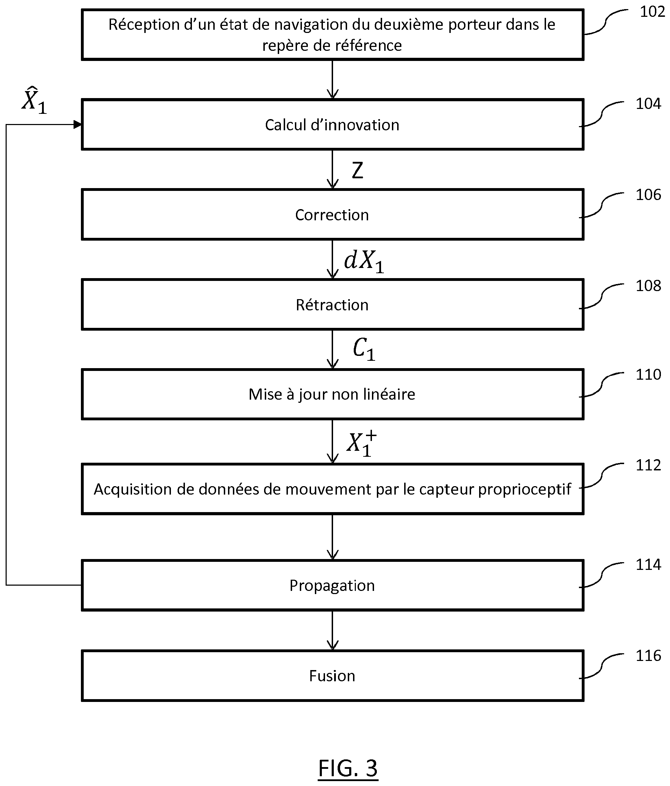

En référence à la **figure 3,** un procédé d'aide à la navigation du premier porteur 1 selon un mode de réalisation, et mettant en oeuvre un filtre de Kalman invariant configuré de la manière indiquée en section 2/, comprend les étapes suivantes.

On suppose qu'une estimation $\hat{X}_1$ de l'état de navigation du premier porteur 1 a été estimée par le filtre de Kalman invariant.

On suppose par ailleurs que le deuxième porteur a estimé un état de navigation $X_2$ de ce deuxième porteur dans le repère de référence, à l'aide de ses moyens internes 12. Cet état de navigation $X_2$ comprend la transformation rigide $T_2$ formée par le couple $(R_2, x_2)$.

Dans une étape 102, l'interface de communication 4 du premier porteur 1 reçoit de l'interface de communication 14 du deuxième porteur 2 les données représentatives de la transformation rigide $T_2$. Ces données sont transmises ensuite à l'unité de traitement 10.

Dans une étape 104, l'unité de traitement 10 calcule l'innovation Z du filtre de Kalman invariant, de la manière suivante

$$Z = Z^x = \log\left(\hat{T}_1^{-1} \circ Y \circ \hat{T}_{21}\right)$$

où :

- Y désigne les données d'observations utilisées par le filtre de Kalman invariant, qui, on le rappelle, correspondent à $T_2$)
- ∘ désigne l'opérateur de composition des transformations rigides,
- log() désigne une application logarithme au sens de la théorie des groupes de Lie, connue de l'homme du métier.

Ce calcul d'innovation est particulièrement avantageux car permet de satisfaire les conditions a. et b. énoncées en introduction.

Dans une étape de correction 106, l'unité de traitement 10 de données multiplie l'innovation Z par une matrice K dite de « gain », ce qui traduit Z en une correction linéaire $dX_1 = KZ$ à appliquer à l'état du système $X_1$.

Le choix des gains est une question classique commune à la plupart des méthodes d'estimation (voir plus bas).

Dans une étape de rétraction 108, l'unité de traitement 10 transforme la correction linéaire $dX_1$ en une correction non linéaire $C_1$ de même nature que $\hat{X}_1$ (l'état $\hat{X}_1$ n'est pas un vecteur car il contient des rotations). La transformation utilisée est une fonction quelconque prenant en argument un vecteur de la dimension de l'état $X_1$ (15 dans notre cas) et retournant un objet de même nature que $X_1$ mais un choix particulièrement performant est l'exponentielle terme à terme du groupe de Lie des couples de transformations rigides.

Est ensuite mise en oeuvre par l'unité de traitement 10 une étape de mise à jour non linéaire 110. Dans cette étape 110, l'unité de traitement 10 combine l'estimation $X_1$ de l'état du système à la correction non linéaire $C_1$ pour construire une estimation corrigée :

$$\hat{X}_1^+ = \hat{X}_1 * C_1$$

La matrice K de gain est choisie de manière à stabiliser l'erreur d'estimation non linéaire e définie par :

$$e = X_1^{-1} * \hat{X}_1$$

Où le symbole $.^{-1}$ est l'inversion usuelle associée à la loi de composition interne $*$. Dans ce mode de réalisation, on obtient une invariance à gauche de l'erreur d'estimation e. Il est bien entendu envisageable de modifier les équations qui précèdent pour obtenir une invariance à droite (l'invariance à gauche étant cependant un mode de réalisation préféré).

Dans une étape d'acquisition 112, le capteur proprioceptif 3 acquiert par ailleurs des données de mouvement du premier porteur 1 dans le premier repère. Ces données de mouvement comprennent typiquement des accélérations et/ou des vitesses, par exemple angulaires. Ces données de mouvement acquises sont transmises à l'unité de traitement 10.

L'étape 112 peut être mise en oeuvre avant, pendant ou après l'une quelconque des étapes 102, 104, 106, 108, 110.

Dans une étape de propagation 114, en soi connue de l'homme du métier, l'unité de traitement 10 génère un état de navigation propagé, à partir de l'état $X_1^+$. Pour cela, l'unité de traitement 10 applique, de façon connue en soi, un modèle d'évolution issue d'une intégration des données acquises par le capteur proprioceptif 6.

Les étapes décrites précédemment forment une itération du filtre de Kalman invariant.

On obtient grâce au filtre de Kalman invariant une propriété qu'on obtiendrait également dans un cas linéaire : l'évolution de l'erreur d'estimation est autonome (elle ne dépend ni de $X_1$ ni de $\hat{X}_1$).

L'émission d'état de navigation du deuxième porteur est répétée dans le temps, de manière à ce que ces états soient reçus par le premier porteur 1.

L'unité de traitement 10 répète ces mêmes étapes, 104, 106, 108, 110, 112, 114 dans de nouvelles itérations du filtre de Kalman invariant, pour chaque nouvel état du deuxième porteur reçu. L'état estimé au cours de l'étape de propagation 112 d'une itération donnée est utilisé comme donnée d'entrée des étapes de calcul d'innovation 104 et de mise à jour non linéaire 110 d'une itération suivante.

En définitive, grâce au procédé, le premier porteur 1 peut obtenir une aide sur sa propre navigation à l'aide des données dont dispose déjà le deuxième porteur 2 sur sa propre navigation.

Plusieurs filtres de Kalman sont avantageusement mis en oeuvre en parallèle par l'unité de traitement 10, de sorte à obtenir plusieurs estimées de l'état de navigation du premier porteur 1.

Il est à noter que certains traitements peuvent être effectués une seule fois pour tous les filtres de Kalman en jeu. Notamment, l'un de ces traitements est la résolution d'une équation de Ricatti que l'homme du métier connaît.

Dans ce cas, l'unité de traitement détermine, pour chaque estimée, une métrique d'écart aux données de l'estimée.

Cette métrique L s'écrit par exemple :

$$L = Z^T S^{-1} Z$$

Où S est la covariance de l'innovation Z comme calculée classiquement dans l'étape de mise à jour d'un filtre de Kalman conventionnel.

La métrique L peut être calculée pour une mesure donnée. En variante, la métrique L est la somme des valeurs obtenues sur un ensemble des mesures passées.

Dans une étape de fusion 116, l'unité de traitement 10 produit une estimée consolidée de l'état de navigation du premier porteur en fonction des estimées et de leurs métriques de vraisemblance associées L.

Dans un mode de réalisation, est sélectionnée en tant qu'estimée consolidée l'estimée obtenue par l'un des filtres qui présente la métrique qui traduit le plus faible écart aux données.

Dans un autre mode de réalisation, l'estimée consolidée est une moyenne des estimées déterminées par les différents filtres, laquelle est pondérée par les métriques.

Les états estimés $X_1$ n'étant pas de nature vectorielle, l'homme du métier pourra utiliser une moyenne adaptée au cas des variétés.

Il est possible dans d'autres variantes, de compléter l'état estimé $X_1$ avec d'autres variables intéressantes, par exemple un état d'erreur propre au capteur proprioceptif (biais, facteur d'échelle, dérive, etc.).

Dans ce cas, la loi de composition interne * est additive pour l'état d'erreur de capteur proprioceptif.

Soit B l'état d'erreur de capteur proprioceptif considéré.

La loi de composition interne devient alors :

$$(R_1, v_1, x_1, R_{21}, x_{21}, B) * (R_1', v_1', x_1', R_{21}', x_{21}', B')$$
$$= (R_1 R_1', v_1 + R_1 v_1', x_1 + R_1 x_1', R_{21} R_{21}', x_{21} + R_{21} x_{21}', B + B')$$

Par ailleurs, comme déjà indiqué plus haut, la matrice $R_{21}$ peut être remplacé par une matrice $R_{12}$ qui permettant de passer du deuxième repère (attaché au deuxième porteur 2) au premier repère (attaché au premier porteur 1). De même, le vecteur $x_{21}$ peut être remplacé par un vecteur $x_{12}$, qui est un vecteur de translation permettant de passer des coordonnées d'un point dans le deuxième repère aux coordonnées du même point dans le première repère.

On pose en outre $T_{12} = (R_{12}, x_{12}) = T_{21}^{-1}$.

Dans ce cas la loi de composition interne, exprimée dans les nouvelles variables, devient :

$$(R_1, v_1, x_1, R_{12}, x_{12}) * (R_1', v_1', x_1', R_{12}', x_{12}') = (R_1 R_1', v_1 + R_1 v_1', x_1 + R_1 x_1', R_{12}' R_{12}, x_{12}' + R_{12}' x_{12})$$

Dans ce cas l'innovation Z devient :

$$Z = \log\left(\hat{T}_1^{-1} \circ Y \circ \hat{T}_{12}^{-1}\right)$$

Dans un autre mode de réalisation, les mesures proprioceptives du porteur 1 comprennent une vitesse angulaire $\omega$. De plus, l'état de navigation $X_2$ du deuxième porteur 2 reçu comporte un vecteur vitesse du deuxième porteur 2 dans le repère de référence et une matrice de rotation représentant une orientation du deuxième porteur dans le repère de référence. Le filtre de Kalman invariant utilise alors une innovation Z de la forme :

$$Z = Z^v = \log\left(\left(\hat{R}_1^T R_2 \hat{R}_{21}, \hat{R}_1^T(v_2 - \hat{v}_1) + \hat{R}_1^T R_2(\omega \times \hat{x}_{21})\right)\right)$$

où :

- $\hat{R}_1$ est une estimée de la matrice de rotation $R_1$ contenue dans la transformation rigide $T_1$. Plus précisément, $R_1$ est telle que les coordonnées $u \in \mathbb{R}^3$ d'un point dans le repère attaché au porteur 1 deviennent $R_1 u + x_1$ dans le repère de référence, où $x_1$ est la position du premier porteur dans le repère de référence.
- $\hat{R}_{21}$ et $\hat{x}_{21}$ sont les estimées de la matrice de rotation $R_{21}$ et du vecteur de translation $x_{21}$ définissant la transformation rigide $T_{21} = (R_{21}, x_{21})$. Plus précisément, $R_{21}$ et $x_{21}$ sont telles que les coordonnées $u \in \mathbb{R}^3$ d'un point dans le repère attaché au porteur 1 deviennent $R_{21} u + x_{21}$ dans le repère attaché au porteur 2,
- $R_2$ est la matrice de rotation représentant l'orientation du porteur 2 (disponible en tant qu'observation, comme indiqué ci-dessus). Plus précisément, $R_2$ est telle que les coordonnées $u \in \mathbb{R}^3$ d'un point dans le repère attaché au porteur 2 deviennent $R_2 u + x_2$ dans le repère de référence, où $x_2$ est la position du porteur 2 dans le repère de référence (qui elle n'a pas besoin d'être observée pour cette revendication).
- $v_2$ est la vitesse du porteur 2 dans le repère de référence (disponible en tant qu'observation)
- $\hat{v}_1$ est la vitesse estimée du porteur 1 dans le repère de référence.
- $\times$ désigne le produit vectoriel classique
- loge.) désigne la fonction logarithme (réciproque de la fonction exponentielle) du groupe de Lie *SE(3)*. Il est à noter que l'objet passé en entrée de la fonction log est un objet appartenant groupe de Lie *SE(3)* et s'écrivant comme un couple constitué d'une matrice de rotation et d'un vecteur de taille 3.

Cet autre mode de réalisation permet de s'approcher fortement des conditions a. et b. énoncées en introduction, et de ne les satisfaire que dans sous l'hypothèse que le deuxième porteur est « à plat », c'est-à-dire sous l'hypothèse que les mesures de vitesse angulaire ω sont toujours sur le même axe, et que cet axe est aussi celui de la rotation $R_{21}$. Cette hypothèse est vérifiée en particulier si toutes les rotations considérées ($R_1$ et $R_2$) ont un axe vertical, comme c'est généralement le cas sur un véhicule terrestre. C'est la raison pour laquelle le mode de réalisation dans lequel on a $Z = Z^x$ est plus avantageux.

Le vecteur $Z^v$ est constitué d'un premier vecteur $ZR$ de taille 3 représentatif d'une rotation, et d'un deuxième vecteur $Z_v^v$ de taille 3 également.

Il est également envisageable, dans un autre mode de réalisation, de combiner les données décrites précédemment pour former une innovation $Z$ plus complexe de la forme suivante :

$$Z = \begin{pmatrix} Z^x \\ Z_v^v \end{pmatrix}$$

## Revendications

1. Procédé d'aide à la navigation d'un premier porteur (1) immobile par rapport à un deuxième porteur (2) lui-même mobile dans un repère de référence, le procédé comprenant les étapes suivantes mises en oeuvre par le premier porteur (1) :

   • réception (102) d'un état de navigation ($X_2$) dans le repère de référence du deuxième porteur (2) fourni par le deuxième porteur (2),
   • acquisition (112) de données de mouvement du premier porteur (1) par au moins un capteur proprioceptif (6) du premier porteur (1),

**caractérisé en ce que** le procédé comprend l'étape suivante mise en oeuvre par le premier porteur:

- estimation d'un état de navigation ($X_1$) du premier porteur (1) par un filtre de Kalman invariant utilisant l'état de navigation ($X_2$) du deuxième porteur (2) comme données d'observation, dans lequel l'état de navigation du premier porteur (1) comprend :

  ○ des premières variables représentatives d'une première transformation rigide ($T_1$) liant un repère attaché au premier porteur (1) au repère de référence, et
  ○ des deuxièmes variables représentatives d'une deuxième transformation rigide ($T_{21}$) liant un repère attaché au deuxième porteur (2) au repère attaché au premier porteur (1), et

  dans lequel le filtre de Kalman invariant utilise comme loi de composition interne une loi comprenant une composition terme à terme de la première transformation rigide et de la deuxième transformation rigide.

2. Procédé selon la revendication précédente, dans lequel les premières variables comprennent une matrice de rotation représentant une orientation du premier porteur (1), et les deuxièmes variables comprennent une matrice de rotation représentant l'orientation du deuxième porteur (2) par rapport au premier porteur (1).

3. Procédé selon l'une des revendications précédentes, dans lequel les premières variables comprennent un vecteur de position du premier porteur (1), et les deuxièmes variables comprennent un vecteur de position du deuxième porteur (2) par rapport au premier porteur (1).

4. Procédé selon l'une des revendications précédentes, dans lequel l'état de navigation du premier porteur (1) estimé comprend en outre un vecteur vitesse du premier porteur (1) dans le repère de référence.

5. Procédé selon la revendication 4 dans sa dépendance à la revendication 3, dans lequel la loi de composition interne applique des transformations identiques à l'un des vecteurs de position et au vecteur vitesse.

6. Procédé selon l'une des revendications précédentes, dans lequel l'état de navigation ($X_2$) du deuxième porteur (2) reçu comprend un vecteur de position du deuxième porteur (2) dans le repère de référence et une matrice de rotation représentant une orientation du deuxième porteur dans le repère de référence.

7. Procédé selon l'une des revendications précédentes, dans lequel le filtre de Kalman invariant utilise une innovation comprenant un vecteur $Z^x$ de la forme :

$$Z^x = \log\left(\hat{T}_1^{-1} \circ Y \circ \hat{T}_{21}\right)$$

où :

- $\hat{T}_1$ est une estimée des premières variables,
- $\hat{T}_{21}$ est une estimée des deuxièmes variables, dans lequel la deuxième transformation rigide permet de passer du premier repère au deuxième repère,
- $Y$ désigne les données d'observations utilisées par le filtre de Kalman invariant,
- $\circ$ désigne une composition,
- $\log(\cdot)$ désigne une application logarithme d'un groupe de Lie.

8. Procédé selon l'une des revendications précédentes, dans lequel l'état de navigation ($X_2$) du deuxième porteur (2) reçu comprend un vecteur vitesse du deuxième porteur (2) dans le repère de référence et une matrice de rotation représentant une orientation du deuxième porteur dans le repère de référence, et dans lequel les données de mouvement du premier porteur (1), acquises le capteur proprioceptif (6), comprennent une vitesse angulaire du premier porteur (1).

9. Procédé selon la revendication précédente, dans lequel les premières variables comprennent une matrice de rotation représentant une orientation du premier porteur (1), et les deuxièmes variables comprennent une matrice de rotation représentant l'orientation du deuxième porteur (2) par rapport au premier porteur (1), et dans lequel le filtre de Kalman invariant utilise une innovation comprenant un vecteur $Z^v$ de la forme :

$$Z^v = \log\left(\left(\hat{R}_1^T R_2 \hat{R}_{21}, \hat{R}_1^T (v_2 - \hat{v}_1) + \hat{R}_1^T R_2 (\omega \times \hat{x}_{21})\right)\right)$$

où :

- $\hat{R}_1$ est une estimée de la matrice de rotation représentant une orientation du premier porteur (1).
- $\hat{R}_{21}$ est une estimée de la matrice de rotation représentant l'orientation du deuxième porteur (2) par rapport au premier porteur (1),
- $\hat{x}_{21}$ est une estimée d'un vecteur de translation définissant la deuxième transformation rigide,
- $R_2$ est la matrice de rotation représentant une orientation du deuxième porteur dans le repère de référence,
- $v_2$ est le vecteur vitesse du deuxième porteur (2) dans le repère de référence,
- $\omega$ est la vitesse angulaire du premier porteur (1),
- $\times$ désigne un produit vectoriel,
- loge.) désigne une application logarithme du groupe de Lie *SE(3)*.

**10.** Procédé selon les revendications 7 et 9 prises en combinaison, dans lequel le vecteur $Z^v$ est constitué d'un premier vecteur $Z_R^v$ de taille 3 représentatif d'une rotation, et d'un deuxième vecteur $Z_v^v$ de taille 3 également, et dans lequel le filtre de Kalman invariant utilise une innovation $Z$ de la forme :

$$Z = \begin{pmatrix} Z^x \\ Z_v^v \end{pmatrix}$$

**11.** Procédé selon les revendications précédentes, dans lequel l'état de navigation du premier porteur (1) estimé comprend en outre au moins un état d'erreur propre au capteur proprioceptif, et dans lequel la loi de composition interne est additive pour cette variable d'erreur propre au capteur proprioceptif.

**12.** Procédé selon l'une des revendications précédentes, dans lequel :

- le premier porteur (1) est un aéronef et le deuxième porteur (2) est un porte-aéronefs, ou
- le premier porteur (1) est un projectile et le deuxième porteur (2) est un aéronef qui porte le projectile, ou
- le premier porteur (1) est une centrale inertielle d'un véhicule et le deuxième porteur (2) est un capteur extéroceptif du véhicule.

**13.** Procédé selon l'une des revendications précédentes, dans lequel l'étape d'estimation est mise en oeuvre en parallèle par plusieurs filtres de Kalman invariants, de sorte à obtenir plusieurs estimées de l'état de navigation du premier porteur (1), et comprend par ailleurs des étapes de :

- pour chaque estimée, détermination d'une métrique de vraisemblance de l'estimée,
- production d'une estimée consolidée de l'état de navigation du premier porteur (1) en fonction des estimées et de leurs métriques de vraisemblance associées.

**14.** Dispositif d'aide à la navigation d'un premier porteur (1) immobile par rapport à un deuxième porteur (2) lui-même mobile dans un repère de référence, le dispositif comprenant :

- au moins un capteur proprioceptif (6) configuré pour acquérir des données de mouvement du premier porteur (1),
- une interface de communication (4) pour recevoir un état de navigation ($X_2$) du deuxième porteur (2) fourni par le deuxième porteur (2),

**caractérisé en ce que** le dispositif comprend:

- une unité de traitement de données (10) adaptée pour mettre en oeuvre un filtre de Kalman invariant configuré pour estimer un état de navigation ($X_1$) du premier porteur (1) en utilisant l'état de navigation du deuxième porteur (2) comme données d'observation, dans lequel l'état de navigation comprend :

o des premières variables ($T_1$) représentatives d'une première transformation rigide liant un repère attaché au premier porteur (1) au repère de référence, et

o des deuxièmes variables ($T_{21}$) représentatives d'une deuxième transformation rigide liant un repère attaché au deuxième porteur (2) au repère attaché au premier porteur (1), et

et dans lequel le filtre de Kalman invariant utilise comme loi de composition interne une loi comprenant une composition terme à terme de la première transformation rigide et de la deuxième transformation rigide.

**Patentansprüche**

1. Navigationsassistenzverfahren eines ersten Trägers (1), der im Verhältnis zu einem zweiten Träger (2), der selbst in einem Referenzbezugssystem beweglich ist, unbewegt ist, wobei das Verfahren die folgenden Schritte umfasst, die von dem ersten Träger (1) durchgeführt werden:

   • Empfangen (102) eines Navigationszustands ($X_2$) im Referenzbezugssystem des zweiten Trägers (2), der von dem zweiten Träger (2) bereitgestellt wird,
   • Erfassen (112) von Bewegungsdaten des ersten Trägers (1) durch mindestens einen propriozeptiven Sensor (6) des ersten Trägers (1),

   **dadurch gekennzeichnet, dass** das Verfahren den folgenden Schritt umfasst, der von dem ersten Träger durchgeführt wird:

   • Schätzen eines Navigationszustands ($X_1$) des ersten Trägers (1) durch einen invarianten Kalman-Filter, der den Navigationszustand ($X_2$) des zweiten Trägers (2) als Beobachtungsdaten nutzt, wobei der Navigationszustand des ersten Trägers (1) umfasst:

      ◦ erste Variablen, die für eine erste starre Transformation ($T_1$) repräsentativ sind, die ein Bezugssystem, das am ersten Träger (1) angebracht ist, mit dem Referenzbezugssystem verbinden, und
      ◦ zweite Variablen, die für eine zweite starre Transformation ($T_{21}$) repräsentativ sind, die ein Bezugssystem, das am zweiten Träger (2) angebracht ist, mit dem Bezugssystem verbinden, das am ersten Träger (1) angebracht ist, und

   wobei der invariante Kalman-Filter als internes Kompositionsgesetz ein Gesetz verwendet, das eine Termfür-Term-Komposition der ersten starren Transformation und der zweiten starrem Transformation umfasst.

2. Verfahren nach vorangehendem Anspruch, wobei die ersten Variablen eine Rotationsmatrix umfassen, die eine Ausrichtung des ersten Trägers (1) repräsentiert und die zweiten Variablen eine Rotationsmatrix umfassen, die die Ausrichtung des zweiten Trägers (2) im Verhältnis zum ersten Träger (1) repräsentiert.

3. Verfahren nach einem der vorangehenden Ansprüche, wobei die ersten Variablen einen Positionsvektor des ersten Trägers (1) umfassen und die zweiten Variablen einen Positionsvektor des zweiten Trägers (2) im Verhältnis zum ersten Träger (1) umfassen.

4. Verfahren nach einem der vorangehenden Ansprüche, wobei der geschätzte Navigationszustand des ersten Trägers (1) ferner einen Geschwindigkeitsvektor des ersten Trägers (1) im Referenzbezugssystem umfasst.

5. Verfahren nach Anspruch 4 in seiner Abhängigkeit von Anspruch 3, wobei das interne Kompositionsgesetz identische Transformationen auf einen der Positionsvektoren und auf den Geschwindigkeitsvektor anwendet.

6. Verfahren nach einem der vorangehenden Ansprüche, wobei der empfangene Navigationszustand ($X_2$) des zweiten Trägers (2) einen Positionsvektor des zweiten Trägers (2) im Referenzbezugssystem und eine Rotationsmatrix umfasst, die eine Ausrichtung des zweiten Trägers im Referenzbezugssystem repräsentiert.

7. Verfahren nach einem der vorangehenden Ansprüche, wobei der invariante Kalman-Filter eine Innovation verwendet, die einen Vektor $Z^x$ verwendet der Form:

$$Z^x = \log\left(\hat{T}_1^{-1} \circ Y \circ \hat{T}_{21}\right)$$

wobei:

- $\hat{T}_1$ ein Schätzwert der ersten Variablen ist,
- $\hat{T}_{21}$ ein Schätzwert der zweiten Variablen ist, wobei die zweite starre Transformation erlaubt, vom ersten Bezugssystem zum zweiten Bezugssystem zu wechseln,
- $Y$ die vom invarianten Kalman-Filter verwendeten Beobachtungsdaten bezeichnet,
- $\circ$ eine Komposition bezeichnet,
- $\log(\cdot)$ eine Logarithmusanwendung einer Lie-Gruppe bezeichnet.

8. Verfahren nach einem der vorangehenden Ansprüche, wobei der empfangene Navigationszustand ($X_2$) des zweiten Trägers (2) einen Geschwindigkeitsvektor des zweiten Trägers (2) im Referenzbezugssystem und eine Rotationsmatrix umfasst, die eine Ausrichtung des zweiten Trägers im Referenzbezugssystem repräsentiert und wobei die Bewegungsdaten des ersten Trägers (1), die von dem propriozeptiven Sensor (6) erfasst wurden, eine Winkelgeschwindigkeit des ersten Trägers (1) umfassen.

9. Verfahren nach vorangehendem Anspruch, wobei die ersten Variablen eine Rotationsmatrix umfassen, die eine Ausrichtung des ersten Trägers (1) repräsentieren und die zweiten Variablen eine Rotationsmatrix umfassen, die die Ausrichtung des zweiten Trägers (2) im Verhältnis zum ersten Träger (1) repräsentieren und wobei der invariante Kalman-Filter eine Innovation verwendet, die einen Vektor $Z^v$ umfasst der Form:

$$Z^v = \log\left(\left(\hat{R}_1^T R_2 \hat{R}_{21}, \hat{R}_1^T(v_2 - \hat{v}_1) + \hat{R}_1^T R_2(\omega \times \hat{x}_{21})\right)\right)$$

wobei:

- $\hat{R}_3$' ein Schätzwert der Rotationsmatrix ist, die eine Ausrichtung des ersten Trägers (1) repräsentiert,
- $\hat{R}_{21}$' ein Schätzwert der Rotationsmatrix ist, die die Ausrichtung des zweiten Trägers (2) im Verhältnis zum ersten Träger (1) repräsentiert,
- $\hat{x}_{21}$ ein Schätzwert eines Translationsvektors ist, der die zweite starre Transformation definiert,
- $R_2$ die Rotationsmatrix ist, die eine Ausrichtung des zweiten Trägers im Referenzbezugssystem repräsentiert,
- $v_2$ der Geschwindigkeitsvektor des zweiten Trägers (2) im Referenzbezugssystem ist,
- $\omega$ die Winkelgeschwindigkeit des ersten Trägers (1) ist,
- x ein Vektorprodukt bezeichnet,
- $\log(\cdot)$ eine Logarithmusanwendung der Lie-Gruppe SE(3) bezeichnet.

10. Verfahren nach den Ansprüchen 7 und 9 in Kombination, wobei der Vektor $Z^v$ aus einem ersten Vektor $Z_R^v$ der Größe 3, der für eine Rotation repräsentativ ist, und aus einem zweiten Vektor $Z_v^v$ ebenfalls der Größe 3 besteht und wobei der invariante Kalman-Filter eine Innovation $Z$ nutzt der Form:

$$Z = \begin{pmatrix} Z^x \\ Z_v^v \end{pmatrix}$$

11. Verfahren nach den vorangehenden Ansprüchen, wobei der geschätzte Navigationszustand des ersten Trägers (1) ferner mindestens einen Fehlerzustand umfasst, der für den propriozeptiven Sensor spezifisch ist und wobei das interne Kompositionsgesetz für diese Fehlervariable, die für den propriozeptiven Sensor spezifisch ist, additiv ist.

12. Verfahren nach einem der vorangehenden Ansprüche, wobei:

- der erste Träger (1) ein Fluggerät ist und der zweite Träger (2) ein Fluggerätträger ist, oder
- der erste Träger (1) ein Geschoss ist und der zweite Träger (2) ein Fluggerät ist, das das Geschoss trägt, oder
- der erste Träger (1) eine Trägheitsmesseinheit eines Fahrzeugs ist und der zweite Träger (2) ein exterozeptiver Sensor des Fahrzeugs ist.

**13.** Verfahren nach einem der vorangehenden Ansprüche, wobei der Schätzschritt von mehreren invarianten Kalman-Filtern parallel durchgeführt wird so dass mehrere Schätzwerte des Navigationszustands des ersten Trägers (1) erhalten werden und im Übrigen Schritte umfasst:

- für jeden Schätzwert, das Bestimmens einer Wahrscheinlichkeitsmetrik des Schätzwerts,
- das Erzeugen eines konsolidieren Schätzwerts des Navigationszustands des ersten Trägers (1) in Abhängigkeit von den Schätzwerten und von deren zugeordneten Wahrscheinlichkeitsmetriken.

**14.** Navigationshilfsvorrichtung eines ersten Trägers (1), der im Verhältnis zu einem zweiten Träger (2), der selbst in einem Referenzbezugssystem beweglich ist, unbewegt ist, wobei die Vorrichtung umfasst:

- mindestens einen propriozeptiven Sensor (6), der ausgelegt ist, um Bewegungsdaten des ersten Trägers (1) zu erfassen,
- eine Kommunikationsschnittstelle (4), um einen vom zweiten Träger (2) bereitgestellten Navigationszustand ($X_2$) des zweiten Trägers (2) zu empfangen,

**dadurch gekennzeichnet, dass** die Vorrichtung umfasst:

- eine Datenverarbeitungseinheit (10), die für die Durchführung eines invarianten Kalman-Filters geeignet ist, der ausgelegt ist, um einen Navigationszustand ($X_1$) des ersten Trägers (1) bei Nutzung des Navigationszustands des zweiten Trägers (2) als Beobachtungsdaten zu schätzen, wobei der Navigationszustand umfasst:

  ○ erste Variablen ($T_1$), die für eine erste starre Transformation repräsentativ sind, die ein Bezugssystem, das am ersten Träger (1) angebracht ist, mit dem Referenzbezugssystem verbinden, und
  ○ zweite Variablen ($T_{21}$), die für eine zweite starre Transformation repräsentativ sind, die ein Bezugssystem, das am zweiten Träger (2) angebracht ist, mit dem Bezugssystem verbinden, das am ersten Träger (1) angebracht ist, und

wobei der invariante Kalman-Filter als internes Kompositionsgesetz ein Gesetz verwendet, das eine Termfür-Term-Komposition der ersten starren Transformation und der zweiten starrem Transformation umfasst.

**Claims**

**1.** Navigation assistance method of a first carrier (1) immobile with respect to a second carrier (2) itself mobile in a reference system, the method comprising the following steps performed by the first carrier (1):

- Receiving (102) a navigation state (X2) in the reference system of the second carrier (2) provided by the second carrier (2),
- acquiring (112) motion data of the first carrier (1) by at least one proprioceptive sensor (6) of the first carrier (1),

**characterized in that** the method comprises the following step performed by the first carrier:

- Estimating a navigational state (X1) of the first carrier (1) by an invariant Kalman filter using the navigational state (X2) of the second carrier (2) as observation data, wherein the navigational state of the first carrier (1) comprises:

  ○ first variables representative of a first rigid transformation (T1) linking a reference frame attached to the first carrier (1) to the reference frame; and
  ○ second variables representative of a second rigid transformation (T21) connecting a reference frame attached to the second carrier (2) to the reference frame attached to the first carrier (1), and

wherein the invariant Kalman filter uses as an internal composition law comprising a term-by-term composition of the first rigid transformation and the second rigid transformation.

**2.** Method according to preceding claim, wherein said first variables comprise a rotation matrix representing an orientation of said first carrier (1) and said second variables comprise a rotation matrix representing the orientation of said second carrier (2) relative to said first carrier (1).

3. A method according to any one of the preceding claims, wherein the first variables comprise a position vector of the first carrier (1) and the second variables comprise a position vector of the second carrier (2) relative to the first carrier (1).

4. The method according to any one of the preceding claims, wherein the estimated navigational state of the first carrier (1) further comprises a velocity vector of the first carrier (1) in the reference system.

5. The method of claim 4 in its dependence on claim 3, wherein the internal composition law applies identical transformations to one of the position vectors and to the velocity vector.

6. A method according to any one of the preceding claims, wherein the received navigational state (X2) of the second carrier (2) comprises a position vector of the second carrier (2) in the reference frame and a rotation matrix representing an orientation of the second carrier in the reference frame.

7. The method of any one of the preceding claims, wherein the invariant Kalman filter uses an innovation that uses a vector Zx of the form:

$$Z^x = \log\left(\hat{T}_1^{-1} \circ Y \circ \hat{T}_{21}\right)$$

where:

    - is an estimate of the first variable,
    - is an estimate of the second variable, where the second rigid transformation allows to switch from the first reference frame to the second reference frame,
    - Y denotes the observation data used by the invariant Kalman filter,
    - ∘ denotes a composition,
    - log(-) denotes a logarithm application of a Lie group.

8. The method according to any one of the preceding claims, wherein the received navigational state (X2) of the second carrier (2) comprises a velocity vector of the second carrier (2) in the reference frame and a rotation matrix representing an orientation of the second carrier in the reference frame, and wherein the motion data of the first carrier (1) detected by the proprioceptive sensor (6) comprises an angular velocity of the first carrier (1).

9. The method of the preceding claim, wherein the first variables comprise a rotation matrix representing an orientation of the first carrier (1) and the second variables comprise a rotation matrix representing the orientation of the second carrier (2) relative to the first carrier (1), and wherein the invariant Kalman filter uses an innovation comprising a vector Zv of the form:

$$Z^v = \log\left(\left(\hat{R}_1^T R_2 \hat{R}_{21}, \hat{R}_1^T (v_2 - \hat{v}_1) + \hat{R}_1^T R_2(\omega \times \hat{x}_{21})\right)\right)$$

where:

    • $\hat{R}_1$, is an estimated value of the rotation matrix representing an orientation of the first carrier (1),
    • $\hat{R}_{21}$, is an estimate of the rotation matrix representing the orientation of the second carrier (2) relative to the first carrier (1),
    • $\hat{x}_{21}$ is an estimate of a translation vector defining the second rigid transformation,
    • R2 is the rotation matrix representing an orientation of the second carrier in the reference frame of reference

        - v2 is the velocity vector of the second carrier (2) in the reference frame of reference,
        - ω is the angular velocity of the first carrier (1),
        - x denotes a vector product
        - log(-) denotes a logarithm application of the Lie group SE(3).

10. A method according to claims 7 and 9 taken in combination, wherein the vector $Z^v$ consists of a first vector $Z_R^v$ of size 3 representative of a rotation, and a second vector $Z_v^v$ of size 3 as well, and in which the invariant Kalman filter uses an innovation $Z$ of the form :

$$Z = \begin{pmatrix} Z^x \\ Z_v^v \end{pmatrix}$$

**11.** The method according to the preceding claims, wherein the estimated navigational state of the first carrier (1) further comprises at least one error state specific to the proprioceptive sensor, and wherein the internal composition law for this error variable specific to the proprioceptive sensor is additive.

**12.** A method according to any one of the preceding claims, wherein:

- the first carrier (1) is a flying device and the second carrier (2) is a flying device carrier, or
- the first carrier (1) is a projectile and the second carrier (2) is an aircraft carrying the projectile, or
- the first carrier (1) is an inertial measurement unit of a vehicle and the second carrier (2) is an exteroceptive sensor of the vehicle.

**13.** A method according to any one of the preceding claims, wherein the estimation step of a plurality of invariant Kalman filters is performed in parallel so as to obtain a plurality of estimates of the navigational state of the first carrier (1), and further comprising steps of:

- for each estimation value, determining a probability metric of the estimation value,
- generating a consolidated estimate of the navigational state of the first carrier (1) as a function of the estimates and of their associated likelihood metrics.

**14.** A navigation aid device of a first support (1) immobile with respect to a second support (2) which is itself mobile in a reference system, the device comprising:

- at least one proprioceptive sensor (6) adapted to detect movement data of the first support (1),
- a communication interface (4) to receive a navigational state (X2) of the second carrier (2) provided by the second carrier (2),

**characterized in that** the device comprises

- a data processing unit (10) adapted to perform an invariant Kalman filter adapted to estimate a navigational state (X1) of the first carrier (1) using the navigational state of the second carrier (2) as observation data, the navigational state comprising:

  ◦ first variables (T1) representative of a first rigid transformation linking a reference frame attached to the first carrier (1) to the reference reference frame; and
  ◦ second variables (T21) representative of a second rigid transformation connecting a reference frame attached to the second carrier (2) to the reference frame attached to the first carrier (1), and

wherein the invariant Kalman filter uses as an internal composition law a law comprising a term-by-term composition of the first rigid transformation and the second rigid transformation.

FIG. 1

2

1

FIG. 2

| 12 | 14 | 4 | 10 | 6 |

2

1

$\hat{X}_1$

```
┌────────────────────────────────────────────────────┐      102
│  Réception d'un état de navigation du deuxième      │
│  porteur dans le repère de référence                │
└────────────────────────────────────────────────────┘

┌────────────────────────────────────────────────────┐      104
│  Calcul d'innovation                                │
└────────────────────────────────────────────────────┘
                         │ Z

┌────────────────────────────────────────────────────┐      106
│  Correction                                         │
└────────────────────────────────────────────────────┘
```

$dX_1$

```
┌────────────────────────────────────────────────────┐      108
│  Rétraction                                         │
└────────────────────────────────────────────────────┘
```

$C_1$

```
┌────────────────────────────────────────────────────┐      110
│  Mise à jour non linéaire                           │
└────────────────────────────────────────────────────┘
```

$X_1^+$

```
┌────────────────────────────────────────────────────┐      112
│  Acquisition de données de mouvement par le         │
│  capteur proprioceptif                              │
└────────────────────────────────────────────────────┘

┌────────────────────────────────────────────────────┐      114
│  Propagation                                        │
└────────────────────────────────────────────────────┘

┌────────────────────────────────────────────────────┐      116
│  Fusion                                             │
└────────────────────────────────────────────────────┘
```

FIG. 3

**EP 3 827 221 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Invariant Extended Kalman Filter: theory and application to a velocity-aided attitude estimation problem. In Decision and Control, 2009 held jointly with the 2009 28th Chinese Control Conférence. CDC/CCC 2009. **BONNABLE, S. ; MARTIN, P. ; SALAÜN, E.** Proceedings of the 48th IEEE Conférence on. IEEE, 2009, 1297-1304
- **BARRAU, A. ; BONNABEL, S.** The invariant extended Kalman filter as a stable observer. *IEEE Transactions on Automatic Control,* 2017, vol. 62 (4), 1797-1812
- **BARRAU, A. ; BONNABEL, S.** *Linear observation systems on groups (I),* 2017
- Inertial Navigation for Guided Missile Systems. **SCOTT M. BEZICK et al.** JOHNS HOPKINS APL TECHNICAL DIGEST. IEEE, 01 Janvier 2010, vol. 28
- **JAY FARELL.** *Aided navigation: GPS with high rate sensors,* 2008